# EUROPEAN PATENT SPECIFICATION

(11) **EP 3 459 787 B1**
(45) Date of publication and mention of the grant of the patent: **25.09.2019**
(21) Application number: 18460009.6
(22) Date of filing: 14.02.2018
(51) Int. Cl.: B60N 2/24, B60N 2/50, B60N 2/52, B60N 2/54

(54) **ITEM OF SUPPORT FURNITURE FOR A STANDING PASSENGER**
STÜTZELEMENTMÖBEL FÜR EINEN STEHENDEN PASSAGIER
ARTICLE DE MOBILIER DE SUPPORT POUR UN PASSAGER DEBOUT

(30) Priority: 25.09.2017 PL 42295717
(43) Date of publication of application: 27.03.2019
(73) Proprietor: S.Z.T.K. "TAPS" Maciej Kowalski, 94-247 Lodz (PL)
(72) Inventor: Kowalski, Maciej, 99-420 Lyszkowice (PL)
(74) Representative: Dziubinska, Joanna

(56) References cited:
- JP-A- 2000 169 094
- US-A1- 2010 102 609

## Description

The subject of the invention is an item of support furniture for a standing passenger, especially in means of transport and public places, intended for use especially in a limited space. The item offers a comfortable support for the sciatic area and the back of a standing person.

There are known some solutions in the form of upholstered elements fixed to side or transverse walls of vehicles, or to additional installation elements, used in public transport, and supporting sciatic areas of standing passengers. Such solutions allow to transfer a part of passenger's weight on the support, disburdening legs and guaranteeing a stable position.

There are also known elements of support for sciatic areas without the support for the back. Document US 2910/0102609 discloses an item of support furniture for a standing passenger containing a frame with the support, wherein it comprises a seat (544) tiltingly fixed to a carrying beam.

The known solutions allow to rest, but they do not personalize the space for a person occupying such a place in the vehicle. The fixed height at which the support is placed is not comfortable for each passenger. The solutions do not offer an ergonomic support.

The aim of the invention is to enhance comfort of a standing passenger and to adapt space in the means of public transport or in public places.

The essence of the item of support furniture for a standing passenger is the possession of a seat fixed centrally and permanently on a tilting ball joint, inside a spiral spring between a carrying beam and the seat; and the carrying beam is placed tiltingly on a furniture frame in a turning node of the beam with a gas spring through the turning node of the beam and the gas spring, and on the furniture frame in the turning node of the gas spring below the turning node of the beam, and the change of the height of the location of the support is made up to 100mm by moving the piston of the gas spring, and the change of the inclination of the support surface from the horizontal position is laterally within the range of maximum +/- 15 degrees, and within the range +/- 10 degrees forwards and backwards.

In the solution according to the invention, mechanism with a gas spring allowing to adjust the length of the extension of the piston rod and to block the fixed position by means of a friction brake released by a lever operated by the passenger has been used as technical means to implement the change of the height of support element and to fix it.

The suspension of the upholstered element of the seat consists of a system of elements connected by articulated joints, an immovable frame construction with a support (1), a carrying beam (2), a seat (3), and a gas spring (4). On the carrying beam (2) there is a ball joint (5) fixed inside and along the axis of the spiral spring (10) and joined tiltingly with the central support point (3). The carrying beam with the seat is joined by the turning node of the beam (6) with the immovable frame with the support (1). The frame is fixed stiffly to the chassis of the carriage. Below the place where the carrying beam is fixed to the seat, there is a gas spring (4) joined by the turning node (7) to the immovable frame (1) and provided with a friction brake (9) that determines the length of the extension of the spring piston.

The gas spring (4) is joined by the turning node (8) with the carrying beam (2), on which the seat (3) is fixed. The spring regulates the height of the location of the seat by changing the length of the extension of the piston. The release of the brake (9) of the gas spring (4) makes the piston extend up to its maximum length, which results in joining the elements by articulated joints: the immovable frame (1), the carrying beam (2), the seat (3), and the gas spring (4); consequently, the seat is moved up to its highest position.

When the seat becomes occupied and the spring brake is released, the passenger can adjust the height of the support to their individual needs. In the course of the journey the spring brake retains the same height of the location of the support.

The fact that the seat is suspended tiltingly in its central point is the realization of the idea of a dynamic seat and makes passengers keep a proper position without leaning their centre of gravity out of the perpendicular. Intuitively, passengers immediately correct any deviations of their positions, and the work of their back and leg muscles makes them keep balance and retain a stable position of their spine in the course of sitting. The element of the seat fixed to the construction of the carrying beam with adjustable raising/ lowering mechanism guarantees the change of the height of its location up to 100mm. The use of the ball joint (5) allows to change the inclination of the support surface from the horizontal position within the range of maximum +/- 15 degrees laterally, and within the range +/- 10 degrees forwards and backwards.

The neutral position of the seat is maintained by a spiral spring (10), pressing against the bottom of the support and against the construction of the carrying beam of the support on the other side, cooperating coaxically with a ball joint (5). A well-matched and stretched spring (10) maintains the unburdened seat (3) horizontally, and when a passenger sits on it, it helps to return to the neutral position at the dynamic functioning of the passenger-support system.

Such a seat system is integrally joined with a frame, to which a properly inclined backrest is fixed; and the backrest may additionally be provided with an individual headrest.

The above concept for the support and the seat with adjustable height intended as a support for a standing person can be used to construct modules with, e.g., one or two places, and conventional in-row fittings in vehicles.

The item of support furniture for a standing passenger according to the invention is intended mainly for public transport. It is a solution aimed at the alleviation of discomfort of standing passengers, and it may also become an alternative method of the development of passenger space inside public transport vehicles, maximizing the number of individual places for passengers of such vehicles.

The presented item of furniture according to the invention offers support for a passenger in the form of support for the back and ischial tuberosities, disburdening legs from full pressure of the passenger's weight.

The solution according to the invention of the support furniture allows to adjust the height of the seat to individual anthropometric features (mainly the height) of a person using it, contributing to their feeling of comfort after taking the seat.

The graduation for the development of in-row support places for standing persons is approx. 650mm, which means that it is significantly smaller than the graduation for conventional seat assemblies, where the recommendation is above 950mm. In this way the interior of the vehicle is developed more economically, with a bigger number of comfortable places for passengers. The solution according to the invention makes travelling more comfortable even in scarce space and allows to develop personalized places for rest during the journey.

In in-row development, at the back of supports foldable tables for i-phones, smartphones, or newspapers, can be installed at head level, so that they can be comfortably used during journey.

The solution according to the invention has been presented in embodiments and figures not limiting its application, with Fig. 1a showing a front view of the furniture, Fig. 1b showing a side view, Fig. 2 showing an axonometric view from the bottom with the seat lowered down, Fig. 3 showing an axonometric view from the bottom with the seat raised, Fig. 4 showing a front view of a module of the furniture with two support places for standing persons, with one seat raised and the other lowered.

### Example 1

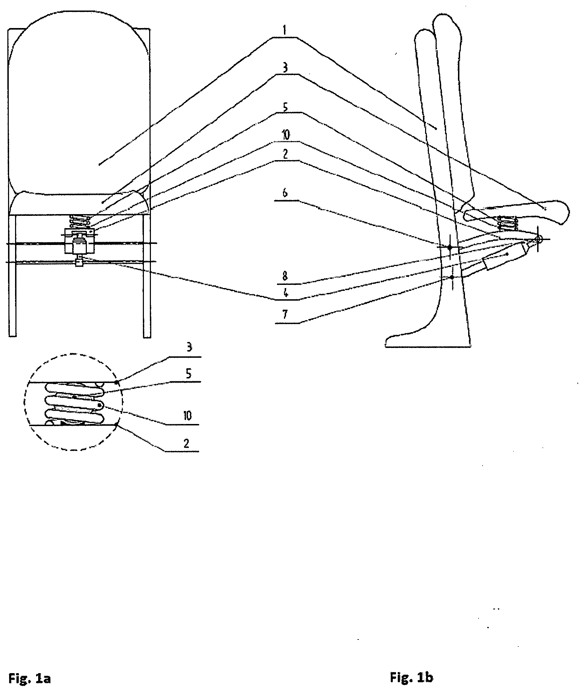

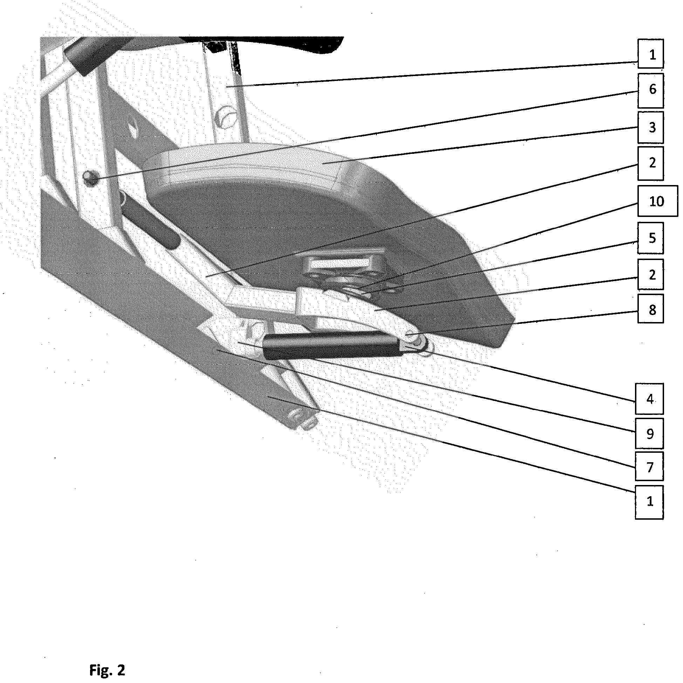

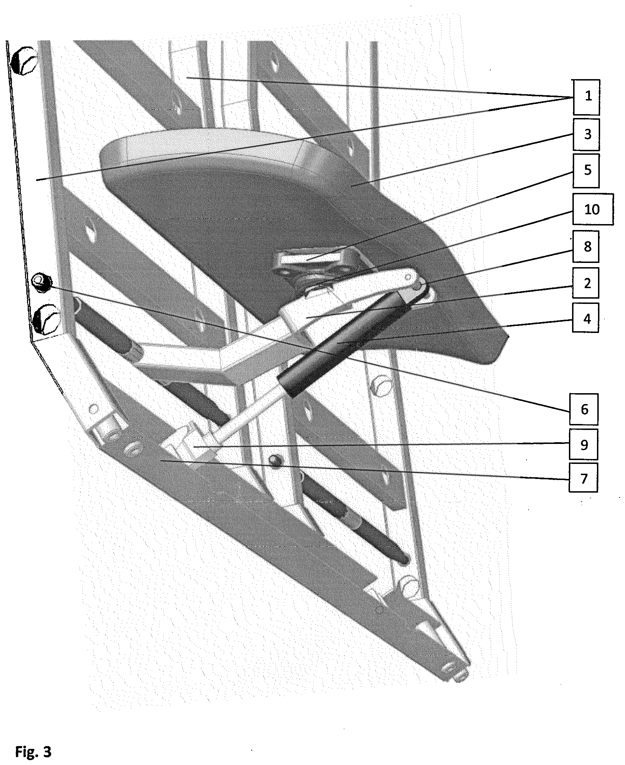

An item of support furniture for a standing passenger (Fig. 1a, Fig. 1b, Fig. 2, Fig. 3), containing the carrying frame with the support (1), has the carrying beam (2), fastened in the turning node (6) by articulated joints, with the seat (3), and joined by the turning node (8) with the gas spring (4) fixed below the carrying beam (2) in the carrying frame (1) by the turning node (7). On the carrying frame (2), inside the spiral spring (10) and along its axis, there is fixed the ball joint (5) joined with the seat (3) in the central point. After a standing person sits down (support of sciatic region) and the brake (9) blocking the extension of the piston of the gas spring (4) is released, the person adjusts the height of the support to their needs. The blocked brake maintains the selected height of the support. The node fixing the seat (3) to the carrying beam (2) by the ball joint (5) and the cooperating spiral spring (10) allows to adjust the position of the support for each fixed height of the seat.

### Example 2

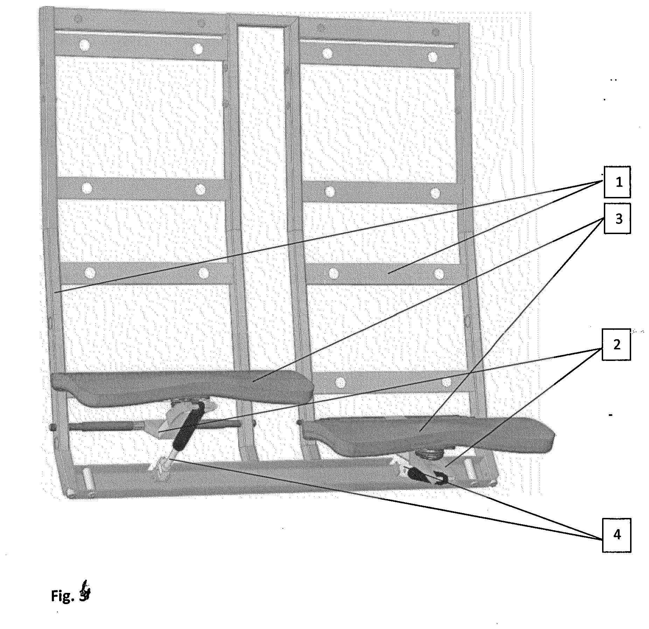

Items of furniture presented in Example 1 may be joined in modules, making a series development (Fig. 4) fixed to the walls inside carriages/ vehicles. Such an individual place for a passenger may be installed even in a small space.

### Example 3

The item of furniture presented in Examples 1 and 2 is installed on the walls and on the sheathing of the floor in vehicles in classical in-row development, giving a bigger number of standing places that allow to rest during the journey per a unit of area than a classical development with sitting places.

## Claims

1. An item of support furniture for a standing passenger containing a frame (1) with a support wherein it has a carrying beam (2) and a seat (3) tiltingly fixed to the carrying beam (2) by a ball joint (5) placed inside and along an axis of a spiral spring (10) between the carrying beam (2) and the seat (3), and the carrying beam (2) is fastened to the frame (1) tiltingly in a turning node (6) and supported by a gas spring (4) through the turning node (8), and on the other side the spring is fixed to the frame (1) in another turning node (7) below the turning node (6), which guarantees the change of the height of the location of the seat within the range of up to 100mm by the extension of a piston of the gas spring (4), and the tilting inclination of the seat surface from the horizontal position is within the range of maximum +/- 15 degrees laterally, and within the range +/- 10 degrees forwards and backwards.

## Patentansprüche

1. Ein Möbelstück als Stütze für den stehenden Passagier; es enthält einen Rahmen mit Lehne und charakterisiert sich dadurch, dass es einen auf einem Tragbalken (2) mittels eines Kugelgelenks (5) schwingend angebrachten Sitz (3) hat; das Kugelgelenk befindet sich innen und axial in der Spiralfeder (10) zwischen dem Tragbalken (2) und dem Sitz (3), wobei der Tragbalken (2) auf dem Rahmen (1) am Drehknoten (6) schwingend angebracht und mittels der Gasfeder (4) über den Drehknoten (8) unterstützt ist; an dem anderen Ende ist die Feder am Rahmen (1) im Drehknoten (7) unter dem Drehknoten (6) befestigt, was für solche Konfiguration die Änderung der Höhe des Sitzes dank dem Schub des Kolbens der Gasfeder (4) im Bereich bis 100 mm ermöglicht; die schwingende Abweichung der Sitzfläche von der horizontalen Lage beträgt maximal +/- 15 Grad zur beiden Seiten und entsprechend +/- 10 Grad nach vorne oder nach hinten.

## Revendications

1. Le meuble à soutenir le passager débout qui contient une rame avec l'appui qui se **caractérise par** cela qu'il possède une siège (3) placé pivotant sur le poutre support (2) à l'aide d'un joint à rotule (5) se trouvant à l'intérieur et dans l'axe du ressort spirale (10) entre le poutre de support (2) et le siège (3), mais le poutre de support (2) est placé sur la rame (1) en oscillant dans le noeud de rotation (6) et soutenu par le ressort à gaz (4) par le noeud de rotation (8) et de l'autre côté le ressort est fixé à la rame (1) dans le noeud de rotation (7), au-dessous du noeud de rotation (6), ce qui assure pour ce système le changement de la hauteur de la position de siège dans l'amplitude de 100 mm établi à l'aide de décalage du piston de ressort à gaz (4), par contre l'inclinaison oscillant de la surface du siège de la position horizontale représente au maximum + / - 15 degré sur les côtés et respectivement + / - 10 degré dans la position avant - arrière.
